# EUROPÄISCHE PATENTSCHRIFT

(11) **EP 0 994 760 B1**
(45) Veröffentlichungstag und Bekanntmachung des Hinweises auf die Patenterteilung: **17.09.2003**
(21) Anmeldenummer: 98940177.3
(22) Anmeldetag: 08.07.1998
(51) Int. Cl.: B23K 9/04

(54) **VERFAHREN ZUM SCHWEISSEN VON FORMKÖRPERN AUS AUFGEKOHLTEM, HITZEBESTÄNDIGEM STAHL**
METHOD FOR WELDING SHAPED BODIES MADE OF CARBURIZED HEAT-RESISTANT STEEL
PROCEDE POUR LE SOUDAGE DE CORPS MOULES EN ACIER CEMENTE REFRACTAIRE

(30) Priorität: 11.07.1997 DE 19729781
(43) Veröffentlichungstag der Anmeldung: 26.04.2000
(73) Patentinhaber: Gierull, Horst, 45891 Gelsenkirchen (DE)
(72) Erfinder: Gierull, Horst, 45891 Gelsenkirchen (DE)
(74) Vertreter: Hoffmeister, Helmut, Dr.
(86) Internationale Anmeldenummer: EP9804234
(87) Internationale Veröffentlichungsnummer: WO99002298

(56) Entgegenhaltungen:
- EP-A- 0 114 893
- US-A- 3 372 465
- US-A- 3 891 820
- PATENT ABSTRACTS OF JAPAN vol. 1, no. 46 (M-23), 1981 & JP 52 117850 A (KOBE STEEL K.K), 3. Oktober 1977

## Beschreibung

Gegenstand der Erfindung ist ein Verfahren zum Schweißen von Formkörpern aus aufgekohltem, hitzebeständigem austenitiscfhem Stahl.
Ein derartiges Verfahren ist aus der US-A-3 891 820 bekannt.

Zur industriellen Herstellung chemischer Grundsubstanzen werden für die Produktionsanlagen im allgemeinen hochlegierte, hitzebeständige Stähle verwendet. Bei diesen Anlagen handelt es sich beispielsweise um Wasserstoffreformer, Anlagen zur Herstellung von Ammoniak, Methanol und Olefinen, Crackanlagen und Wärmebehandlungsöfen. Die Werkstoffe werden in diesen Anlagen für Reformerrohre, Sammler, Leitungen, Ofenrollen und sonstige Teile eingesetzt. Hitzebeständige Stahlgußsorten sind einsetzbar bei Temperaturen von über 600 °C und unempfindlich bei Inkontaktbringen mit gasförmigen aggressiven Substanzen. Die Werkstoffe besitzen im allgemeinen folgende Zusammensetzung: 0,3 bis 0,5 Gew.-% Kohlenstoff, 1,0 bis 2,5 Gew.-% Silicium, < 1,5 Gew.-% Mangan, 20 bis 50 Gew.-% Chrom und 10 bis 70 Gew.-% Nickel. Der Gehalt an Phosphor bzw. Schwefel ist in diesen Stählen sehr gering. Aufgrund ihres hohen Kohlenstoffgehaltes und einem hohen Anteil an den Legierungselementen Chrom und Nickel besitzen diese Werkstoffe ausgezeichnete Wärmebeständigkeit und gute mechanische Eigenschaften selbst bei hohen Temperaturen.

Bei der Verwendung dieser Legierungen ergibt sich jedoch das Problem, daß diese nach einer bestimmten Betriebszeit aufgrund der hohen Betriebstemperaturen und des Einwirkens der unterschiedlichen in den Anlagen vorhandenen Gasgemische, allmählich altern und verspröden. Es kommt so zum Ausscheiden von intermetallischen Phasen und zu Carbidausscheidungen. Weiterhin kohlen oder sticken die Werkstoffe auf.

Hierdurch verändern sich die mechanischen Eigenschaften der Werkstoffe erheblich. So kommt es zu einer starken Verringerung der Zugfestigkeit, der Bruchdehnung und es tritt ein Dehnungsverlust auf.

Aus dem Stand der Technik ist es bekannt, daß hitzebeständige Stahlgußsorten möglichst ohne oder nur mit geringer handwarmer Vorwärmung geschweißt werden sollten und keine Nachbehandlung notwendig ist. Diesbezüglich wird beispielsweise verwiesen auf die DIN 17465 vom August 1993, Tabelle 6.

Das Handbuch für die Schweißtechnik, 5. Auflage, März 1939, Seiten 84, 89 beschreibt ebenfalls, daß hitzebeständige Stähle eine sehr geringe Wärmeleitfähigkeit und höhere Wärmeausdehnung besitzen als unlegierte Stähle. Es wird daher empfohlen, beim Schweißen immer das Verfahren anzuwenden, welches dem Werkstück die geringste Wärmemenge zuführt. Aus Seite 89 ist zu entnehmen, daß diese Werkstoffe im kalten Zustand geschweißt werden sollen.

Malisius, R.: "Schrumpfungen, Spannungen und Risse beim Schweißen" in Fachbuchreihe "Schweißtechnik", Seite 20, Absatz 2.52, "hitzebeständige Stähle", 1957 enthält ebenfalls Angaben zum Schweißen von hitzebeständigen Stählen. Es wird beschrieben, daß es zweckmäßig sein kann zur Milderung der Empfindlichkeit der hitzebeständigen Stähle gegen Wärmespannungen, die zu schweißenden Teile vor dem Schweißen langsam auf etwa 200° C anzuwärmen. Zum Ausgleich der sehr hohen inneren Spannung und der Härteunterschiede ist weiterhin ein nachträgliches Glühen mit langsamer gleichmäßiger Erwärmung und Abkühlung zu empfehlen.

Wirtz, Heribert: "Das Verhalten der Stähle beim Schweißen" in Fachbuchreihe "Schweißtechnik" 44, 1. Auflage, März 1968, Seiten 143 - 147 beschreiben ebenfalls, daß austenitische Stähle, die hitzebeständig sind, möglichst kalt verschweißt werden sollen. Es wird angeführt, daß hohe Vorwärmtemperaturen in Verbindung mit der zugeführten Schweißwärme örtliche Überhitzungen hervorrufen, die Rißbildungen zur Folge haben. Dabei wird zum Schweißen der Wurzellagen eine Vorwärmung im Bereich 100 bis 150 °C empfohlen, bei dickwandigen Werkstükken bis zu 200 °C. Diese Temperatur soll jedoch nicht überschritten werden.

Damit ein störungsfreier Betrieb auf Dauer gewährleistet ist, müssen nach einer bestimmten Betriebsdauer einzelne Teile der Anlagen ausgewechselt werden. Hierbei ist es häufig notwendig, Schweißverbindungen zwischen alten und neuen Teilen herzustellen. Aufgrund der unterschiedlichen mechanischen Eigenschaften von verschiedenen Altteilen sowie Altteilen und Neuteilen kommt es beim Verbindungsschweißen dieser Teile oder auch bei der Auftragsschweißung an alten Formteilen mit neuem Werkstoff zu erheblichen Problemen. Durch die Erhöhung des Kohlenstoffgehaltes wird die Heißrißanfälligkeit der Werkstoffe gesteigert. Die durch die Aufkohlung verursachte Bildung eines Carbidnetzwerkes führt zu einer Versprödung des Werkstoffes, so daß Schweißeigenspannungen nicht durch örtliches Fließen abgebaut werden können und daher zu Rissen führen.

Somit entstehen beim Verbindungsschweißen von verschiedenen Altteilen, alten und neuen Teilen sowie bei der Auftragsschweißung häufig Risse, die dazu führen, daß das geschweißte Werkstück nicht mehr brauchbar ist. Dies verursacht zum einen hohe Materialkosten, zum anderen aber auch erhebliche Produktionsausfälle, da die Anlagen während dieser Schweißarbeiten stillgelegt werden müssen. Die oben beschriebenen Verfahren des Standes der Technik haben sich daher nicht als durchführbar erwiesen, da beim Verschweißen häufig Risse an den verbundenen Teilen auftraten.

Die technische Aufgabe der Erfindung liegt darin, ein Verfahren zum Schweißen von Formkörpern aus aufgekohltem, hitzebeständigem Stahl zur Verfügung zu stellen, das ein einfaches Verbindungsschweißen von aufgekohltem, hitzebeständigem Stahl mit Neuteilen oder auch Auftragsschweißen ermöglicht, ohne daß beim Schweißen Risse auftreten, die zu einer Beschädigung des Werkstoffs führen.

Diese technische Aufgabe wird durch ein Verfahren nach Anspruch 1 gelöst.

Es wurde überraschenderweise festgestellt, daß ein Verschweißen von aufgekohltem, hitzebeständigem Stahl mit entsprechenden Neuteilen oder auch anderen aufgekohlten, hitzbeständigen Altteilen auf einfache Weise möglich ist, wenn die zu verschweißenden Teile vor dem Verschweißen auf die angegebenen hohen Temperaturen vorgewärmt werden und bei hohen Stromstärken verschweißt werden. Durch diese neugewählten Vorwärm- und Schweißparameter ist die Schweißbarkeit von aufgekohltem Formteilen wiederherzustellen, wobei die Eigenspannungen abgebaut werden und rißfreie Schweißnähte erzielt werden können.

Das erfindungsgemäße Schweißverfahren kann sowohl für das Auftragsschweißen als auch für das Verbindungsschweißen eingesetzt werden.

In einer bevorzugten Ausführungsform wird das Auftragsschweißen im WIG-Schweißverfahren durchgeführt. Es handelt sich dabei um ein elektrisches Schutzgasschweißverfahren mit nicht abschmelzender Wolframelektrode.

Als Zusatzwerkstoffe zum Schweißen werden bevorzugt chromund nickelhaltige Legierungen oder Nickelbasislegierungen eingesetzt. Besonders bevorzugt sind die folgenden Legierungen:
Thermanit Nicro 82 SG-Ni CR 20 Nb (2.4648)
Thermanit Nicro 82 E-Ni Cr 19 Nb (2.4648)
Sandvik Sanicro 71 EL-Ni Cr 19 Nb
Thermanit 25/35 Nb Si (1.4853)
Thermanit 25/35 R (1.4853) 25/35 Nb
bzw. artgleiche, dem Grundwerkstoff entsprechende Legierungen.

Erfindungsgemäß ist der hitzebeständige Stahl ein austenitischer Stahl. Die Vorwärmung erfolgt bevorzugt von der Schweißflanke ausgehend zum Grundwerkstoff hin, wobei die Durchwärmungstiefe beim Vorwärmen 10 bis 50 mm betragen kann.

Der Lagenaufbau beim Verschweißen kann in bevorzugter Weise von der Außenseite her erfolgen, wobei die zu verschweißenden Werkstücke nach jeder aufgeschweißten Lage nachgewärmt werden, so daß die Vorwärmtemperatur von 700 bis 900 °C während des gesamten Schweißprozesses gehalten wird. Die Auftragsdikke der Lagen beträgt bevorzugt 6 bis 8 mm.

In bevorzugter Weise erfolgt nach dem Verbindungsschweißen eine Nachwärmebehandlung bei Temperaturen von 850 bis 900 °C zur mühelosen Entfernung der Schweißschlacke. Nach dem Schweißen läßt man langsam auf Raumtemperatur abkühlen. Vorzugsweise wird die Schweißstelle hierzu wärmedämmend isoliert.

Die zu ersetzenden Teile werden ohne Lösungsglühen verschweißt. Unter Lösungsglühen versteht man das Tempern der zu verschweißenden Werkstücke auf ca. 1.200° C über einen längeren Zeitraum von etwa 4 Stunden und anschließendes Abkühlen auf Raumtemperatur. Im Fall des Verschweißens von hohlen Formkörpern erfolgt der Flankenaufbau bevorzugt durch Verschweißen bei 60 bis 140 A und der Aufbau der Füll- und Decklagen bei 90 bis 200 A. Das Vorwärmen wird mit einer Gas/Sauerstoffflamme durchgeführt. Das Heften der zu schweißenden Teile erfolgt nach dem Aufheizen. Ein spannungsarmes Glühen nach dem Verschweißen entfällt ebenfalls.

Mit dem erfindungsgemäßen Schweißverfahren ist es sogar möglich, aufgekohlte Werkstoffe zu verschweißen, die bereits negative Anschmelzproben ergaben und daher als nicht mehr schweißbar eingestuft wurden. Die geschweißten Werkstücke zeigten bei nachfolgenden Prüfungen keine Risse und keine weiteren Aufhärtungen der Wärmeeinflußzonen. Das Schweißverhalten der Stähle entsprach dem einer Verbindung zwischen zwei Neuteilen.

Durch das erfindungsgemäße Verfahren ist es möglich, Verbindungen zwischen alt/alt-Werkstoffen und alt/neu-Werkstoffen herzustellen. Bögen, Sammler und Hosenrohre aufzuarbeiten und mit neuen Rohrstücken zu verbinden und diese dann wieder problemlos in die entsprechenden Anlagen einzuschweißen.

Durch das erfindungsgemäße Verfahren werden daher die Schweißzeiten bei entsprechenden Reparaturarbeiten erheblich verkürzt. Benötigte man nach bisherigen Verfahren für eine Auftragsschweißung mit nachfolgender Prüfung ca. 7,5 Std., so sind mit dem erfindungsgemäßen Verfahren Fertigstellungszeiten von ca. 65 min. möglich. Für eine Verbindungsschweißung alt/alt bzw. alt/neu-Verbindung, Durchmesser 150 mm benötigte man nach dem bisherigen Verfahren ca. 4 Std., mit dem erfindungsgemäßen Verfahren ca. 40 min. bis zur Fertigstellung.

Hierdurch werden sowohl die Materialkosten als auch die Reparaturkosten erheblich gesenkt und auch die Ausfallzeiten der Produktionsanlagen verringert. Das erfindungsgemäße Verfahren ist einsetzbar bei alt/alt-Verbindungen von Werkstoffen ohne Auftragsschweißung, bei alt/neu-Verbindungen ohne Auftragsschweißung, bei Reparaturschweißung an gerissenen Schweißnähten und bei der Aufarbeitung von Formteilen. Eine. Schweißbarkeitsuntersuchung der zu schweißenden Teile entfällt.

Die nachfolgenden Beispiele sollen die Erfindung näher erläutern.

### Beispiel 1

Auftragsschweißung bei aufgekohlten Spaltrohren

Ein Rohrstück wird etwa 150 mm oberhalb der Schweißnaht am Formteil (Bogen/Hosenrohr) geschnitten. Das Rohrstück wird im Winkel von 30° an der Innen- und Außenseite im Schweißbereich auf einer Breite von etwa 20 mm und mindestens 1 mm tief mechanisch angefast. Die Oberfläche wird beschliffen, die Kanten werden abgerundet. Anschließend wird die Stirnfläche auf Anrisse geprüft. Es erfolgt ein Aufheizen des zu verschweißenden Teils auf 820 bis 850 °C, wobei das Werkstück hellkirschrot bis hellrot wird. Das Vorwärmen erfolgt mittels einer Gas/Sauerstoffflamme von der Schweißflanke ausgehend zum Grundwerkstoff. Die Durchwärmungstiefe beim Vorwärmen ist ca. 25 mm.

Anschließend wird mittels des WIG-Schweißverfahrens unter Einsatz der Zusatzwerkstoffe:
Thermanit Nicro 82 SG-Ni CR 20 Nb (2.4648)
Thermanit Nicro 82 E-Ni Cr 19 Nb (2.4648)
Sandvik Sanicro 71 EL-Ni Cr 19 Nb
Themanit 25/35 Nb Si (1.4853)
Thermanit 25/35 R (1.4853) 25/35 Nb
bzw. artgleichen, dem Grundwerkstoff entsprechende Legierungen geschweißt. Der Lagenaufbau erfolgt von der Rohraußenseite her. Die Auftragung erfolgt mit einer Stromstärke von 170 5 A. Der Zusatzdraht wird in ausreichender Weise zugeführt. Es wird eine Wolfram-Elektrode mit einer Dicke > 3,2 mm verwendet. Nach jeder Lage wird auf 850 bis 900° C nachgewärmt. Die Auftragsdicke beträgt mindestens 6 bis 8 mm. Nach der letzten Lage erfolgt eine kurze Nachwärmung auf 850° C. Anschließend wird die Schweißstelle wärmeisoliert, und man läßt sie langsam bis auf ca. 80° C abkühlen. Danach wird die Schweißfase 30° mechanisch hergestellt. Abschließend wird die Auftragsschweißung mittels FED-Prüfung auf Anrisse geprüft.

### Beispiel 2

### Verbindungsschweißung eines aufgetragenen Altteils mit einem Neuteil (Rohr)

Es werden zwei Rohre miteinander verschweißt. Zunächst wird die aufgetragene Schweißkante mechanisch in einem Winkel von 30° angefast. Das neue Rohrstück, das etwa 150 mm lang ist, wird ebenfalls im Winkel von etwa 30° angefast. In einem weiteren Schritt wird das neue Rohr auf das aufgetragene Werkstück geheftet, wobei der Luftspalt 3 bis 4 mm beträgt. Beim WIG-Heften muß die Wurzelseite mit Formiergas geschützt.

Das Verschweißen erfolgt wahlweise in der Weise, daß die Wurzel mittels E-Handschweißverfahren und die Füll- und Decklagen mittels WIG-Schweißverfahren ausgeführt werden. Alternativ hierzu können die Wurzel und die Füll- und Decklagen auch im WIG-Sohweißverfahren ausgeführt sein. Beim WIG-Schweißen wird die Wurzelseite mit Formiergas 90:10 bzw. 80:20 oder Stickstoff geschützt. Als Zusatzwerkstoff können die folgenden Legierungen
Thermanit Nicro 82 SG-Ni CR 20 Nb (2.4648)
Thermanit Nicro 82 E-Ni Cr 19 Nb (2.4648)
Sandvik Sanicro 71 EL-Ni Cr 19 Nb
Thermanit 25/35 Nb Si (1.4853)
Thermanit 25/35 R (1.4853) 25/35 Nb
bzw. artgleiche, dem Grundwerkstoff entsprechende Legierungen eingesetzt werden. Die Lagentemperatur beträgt 120 °C. Der Lagenaufbau erfolgt von der Wurzelseite her. Die Stromstärke beträgt für die Wurzel 130 A und für die Zwischen- und Decklagen 160 A.

### Beispiel 3

### Verbindungsschweißung von alt/alt-Verbindungen

Als Werkstoffe werden Altteile eingesetzt, ein aufgekohltes altes Hosenrohr, ein aufgekohlter alter Bogen, sowie ein aufgekohltes altes Rohr. Zur Nahtvorbereitung werden zunächst unter einem Öffnungswinkel von 60° und bezogen auf den teilweisen oder gesamten Umfang des Rohres Risse und schadhafte Stellen ausgeschliffen. Danach erfolgt das Vorwärmen auf ca. 820 bis 850° C, wobei der gesamte Umfang des Rohres aufgeheizt wird. Hierzu werden zwei Gas/Sauerstoff-Flammen verwendet. Die Vorwärmzone beträgt mindestens 25 mm von der Nahtmitte an.

Das Schweißen erfolgt als E-Hand-Schweißen. Dies gilt sowohl für die Wurzel als auch für die Füll- und Decklagen. Die Vorwärmtemperatur muß während der gesamten Schweißzeit eingehalten werden. Dies wird dadurch gewährleistet, daß nach jeder Lage nachgewärmt wird. Die Wurzel wird mit einer Stromstärke von 90 A geschweißt, die Zwischen- und Decklagen mit 120 A. Als Zusatzwerkstoffe werden die in Beispiel 1 genannten verwendet.

Nach Schweißen der letzten Lage erfolgt eine Nachwärmung auf 850° C zum Entfernen der Schlacke. Die geschweißten Teile läßt man an ruhiger Luft auf Prüftemperatur abkühlen, wobei keine schroffe Abkühlung erfolgen darf. Es ist daher bevorzugt, die verschweißten Teile mit Isolierstoff zu versehen, um eine langsame Abkühlung zu ermöglichen. Nach Abkühlung auf Prüftemperatur (Raumtempera-tur) ist die Decklage im gesamten Umfange kerbfrei zu schleifen.

Nach dem Abschluß der Schweißarbeiten erfolgt eine Sichtprüfung, sowie eine FED-Prüfung der Decklage.

### Beispiel 4

### Verbindungsschweißung von alt/neu-Verbindungen

Ein altes aufgekohltes Hosenrohr, ein alter aufgekohlter Bogen und ein neues Rohr sollen durch Schweißen verbunden werden. Zur Nahtvorbereitung wird zunächst bei den Altteilen die Schweißflanke in einem Winkel von 30° angefast. Es erfolgt danach eine FED-Prüfung. Das Neuteil wird ebenfalls mit einem Winkel von 30° angefast. Danach erfolgt das Vorwärmen des gesamten Umfanges auf ca. 820 bis 850° C mittels zweier Gas/Sauerstoff-Flammen mit anschließender Heftung. Die Vorwärmzone muß dabei jeweils mindestens 25 mum von der Nahtmitte betragen.

Als Schweißverfahren wird das E-Hand-Verfahren eingesetzt. Wurzel, Füll- und Decklagen werden mittels E-Hand-Schweißens aufgetragen. Die Vorwärmtemperatur muß während der gesamten Schweißzeit eingehalten werden, weshalb nach jeder Schweißlage nachgewärmt wird. Die Wurzel wird mit einer Stromstärke von etwa 70 A, die Zwischen- und Decklagen mit 120 A geschweißt. Als Zusatzwerkstoffe werden die in Beispiel 1 genannten verwendet. Nach Aufbringen der letzten Lage erfolgt eine Nachwärmung auf 850° C zum Entfernen der Schlacke. Man läßt dann unter Isolierstoff auf Prüftemperatur abkühlen. Hierbei ist darauf zu achten, daß keine schroffe Abkühlung erfolgt. Nach der Abkühlung auf Prüftemperatur (Raumtemperatur) wird die Decklage im gesamten Umfange gereinigt und eventuell kerbfrei geschliffen. Nach Abschluß der Schweißarbeiten erfolgt eine Sichtprüfung, sowie eine FED-Prüfung der Decklage.

## Patentansprüche

1. Verfahren zum Schweißen von Formkörpern aus aufgekohltem, hitzebeständigem, austenitischem Stahl, wobei die zu schweißenden Teile vor dem Verschweißen ohne mehrstündiges Lösungsglühen auf Temperaturen von 700 bis 900 °C vorgewärmt werden und mit Stromstärken von 50 bis 200 A verschweißt werden.

2. Verfahren nach Anspruch 1, **dadurch gekennzeichnet, daß** die Vorwärmung auf Temperaturen von 800 bis 900 °C erfolgt.

3. Verfahren nach Anspruch 1 oder 2, **dadurch gekennzeichnet, daß** das Schweißen als Auftragsschweißen oder Verbindungsschweißen erfolgt.

4. Verfahren nach den Anspruchen 1 bis 3, **dadurch gekennzeichnet, daß** das Auftragsschweißen mittels WIG-Schweißverfahren erfolgt.

5. Verfahren nach den Ansprüchen 1 bis 4, **dadurch gekennzeichnet, daß** die zu verschweißenden Teile von der Schweißflanke ausgehend zum Grundwerkstoff vorgewärmt werden.

6. Verfahren nach den Ansprüchen 1 bis 5, **dadurch gekennzeichnet, daß** die Durchwärmungstiefe beim Vorwärmen 10 bis 50 mm beträgt.

7. Verfahren nach den Ansprüchen 1 bis 6, **dadurch gekennzeichnet, daß** der Lagenaufbau beim Verschweißen von der Außenseite her erfolgt.

8. Verfahren nach den Ansprüchen 1 bis 7, **dadurch gekennzeichnet, daß** die zu verschweißenden Werkstücke nach jeder aufgeschweißten Lage auf Temperaturen von 700 bis 900 °C nachgewärmt werden.

9. Verfahren nach den Ansprüchen 1 bis 8, **dadurch gekennzeichnet, daß** nach dem Verbindungsschweißen ein Nachwärmen bei Temperaturen von 850 bis 900 °C zum Entfernen der Schlacke erfolgt.

10. Verfahren nach den Ansprüchen 1 bis 9, **dadurch gekennzeichnet, daß** die Auftragsdicke der Lagen 6 bis 8 mm beträgt.

11. Verfahren nach den Ansprüchen 1 bis 10, **dadurch gekennzeichnet, daß** im Falle des Verschweißens von hohlen Formkorpern der Fiankenaufbau durch Verschweißen bei 60 bis 140 A und der Aufbau der Full- und Decklagen bei 90 bis 200 A erfolgt.

12. Verfahren nach den Ansprüchen 1 bis 11, **dadurch gekennzeichnet, daß** das Vorwarmenbeim Aufrragsschweißen mit einer Gas/Sauerstoffflamme erfolgt.

13. Verfahren nach den Ansprüchen 1 bis 12, **dadurch gekennzeichnet, daß** das Vorwärmen beim Verbindungsschweißen mittels zweier Gas/Sauerstoffflammen erfolgt.

14. Verfahren nach den Ansprüchen 1 bis 13, **dadurch gekennzeichnet, daß** das Heften der zu verschweißenden Teile nach dem Aufheizen erfolgt.

15. Verfahren nach den Ansprüchen 1 bis 14, **dadurch gekennzeichnet, daß** ein Spannungsarmglühen nach dem Verschweißen entfällt.

16. Verfahren nach den Ansprüchen 1 bis 15, **dadurch gekennzeichnet, daß** die Schweißstelle nach dem Schweißen wärmeisoliert wird, um langsam auf Raumtemperatur abzukühlen.

17. Verfahren nach den Ansprüchen 1 bis 16, **dadurch gekennzeichnet, daß** das Verbindungsschweißen mittels zweier Schweißbrenner erfolgt.

18. Verfahren nach den Anspruchen 1 bis 17, **dadurch gekennzeichnet, daß** das Verbindungsschweißen mittels E-Hand-Schweißverfahren erfolgt.

19. Verfahren nach den Ansprüchen 1 bis 18, **dadurch gekennzeichnet, daß** eine Schweißbarkeitsuntersuchung entfallt.

## Claims

1. A process for welding shaped bodies of carburized heat-resistant austenitic steel whereby the parts to be welded - without solution annealing of several hours - are preheated before welding to temperatures of 700 to 900°C and are welded with current intensities of 50 to 200 A.

2. A process according to claim 1, **characterized in that** preheating takes place at temperatures of 800 to 900°C.

3. A process according to claims 1 or 2, **characterized in that** welding is performed as weld surfacing or as joining by welding.

4. A process according to claims 1 to 3, **characterized in that** weld surfacing is performed by means of a TIG (tungsten inert gas) welding technique.

5. A process according to claims 1 to 4, **characterized in that** the parts to be welded are preheated starting from the weld side wall toward the base material.

6. A process according to claims 1 to 5, **characterized in that** a soaking depth during preheating is 10 to 50 mm.

7. A process according to claims 1 to 6, **characterized in that** the buildup of layers during welding takes place from the outside.

8. A process according to claims 1 to 7, **characterized in that** the workpieces to be welded together are reheated to temperatures of 700 to 900°C after each built-up weld layer.

9. A process according to claims 1 to 8, **characterized in that** a postweld heating at temperatures of 850 to 900°C is performed after joining by welding in order to remove slag.

10. A process according to claims 1 to 9, **characterized in that** a thickness build-up per layer is 6 to 8 mm.

11. A process according to claims 1 to 10, **characterized in that** in case of welding hollow shaped bodies the build-up of a side wall is performed by welding at 60 to 140 A and build-up of filler and top layers is performed by welding at 90 to 200 A.

12. A process according to claims 1 to 11, **characterized in that** preheating for weld surfacing is performed with an oxy-gas flame.

13. A process according to claims 1 to 12, **characterized in that** preheating for joining by welding is performed by means of two oxy-gas flames.

14. A process according to claims 1 to 13, **characterized in that** tacking of the parts to be welded is performed after heatup.

15. A process according to claims 1 to 14, **characterized in that** after welding stress-relief annealing is avoided.

16. A process according to claims 1 to 15, **characterized in that** the weld area is thermally insulated after welding, in order to achieve slow cooling down to room temperature.

17. A process according to claims 1 to 16, **characterized in that** joining by welding is performed by means of two welding torches.

18. A process according to claims 1 to 17, **characterized in that** joining by welding is performed by means of a manual electric welding technique.

19. A process according to claims 1 to 18, **characterized in that** a weldability examination is not performed.

## Revendications

1. Procédé de soudage de corps moulés en acier austénitique cémenté réfractaire, les pièces à souder étant, avant le soudage, préchauffées à des températures de 700 à 900°C sans recuit de mise en solution de plusieurs heures et soudées avec des intensités de courant de 50 à 200 A.

2. Procédé selon la revendication 1, **caractérisé en ce que** le préchauffage s'effectue à des températures de 800 à 900°C.

3. Procédé selon la revendication 1 ou 2, **caractérisé en ce que** le soudage est un soudage à superposition ou un soudage d'assemblage.

4. Procédé selon les revendications 1 à 3, **caractérisé en ce que** le soudage à superposition s'effectue par un procédé de soudage à tungstène et à gaz inerte.

5. Procédé selon les revendications 1 à 4, **caractérisé en ce que** les pièces à souder sont préchauffées depuis le flanc de soudage vers le matériau de base.

6. Procédé selon les revendications 1 à 5, **caractérisé en ce que** la profondeur de pénétration de la chaleur lors du préchauffage est de 10 à 50 mm.

7. Procédé selon les revendications 1 à 6, **caractérisé en ce que** la constitution des couches lors du soudage s'effectue depuis la face extérieure.

8. Procédé selon les revendications 1 à 7; **caractérisé en ce que** les pièces à souder sont, après chaque couche soudée, réchauffées à des températures de 700 à 900°C.

9. Procédé selon les revendications 1 à 8, **caractérisé en ce qu'**après le soudage d'assemblage, on procède à un réchauffage à des températures de 850 à 900°C pour éliminer la scorie.

10. Procédé selon les revendications 1 à 9, **caractérisé en ce qu'**on applique les couches sur une épaisseur de 6 à 8 mm.

11. Procédé selon les revendications 1 à 10, **caractérisé en ce qu'**en cas de soudage de corps moulés creux, la constitution des flancs s'effectue par soudage à entre 60 et 140 A et la constitution des couches de remplissage et des couches extérieures par soudage à entre 90 et 200 A.

12. Procédé selon les revendications 1 à 11, **caractérisé en ce que** le préchauffage lors du soudage par superposition s'effectue avec une flamme de gaz/d'oxygène.

13. Procédé selon les revendications 1 à 12, **caractérisé en ce que** le préchauffage lors du soudage d'assemblage s'effectue au moyen de deux flammes de gaz/d'oxygène.

14. Procédé selon les revendications 1 à 13, **caractérisé en ce que** la fixation des pièces à souder s'effectue après le préchauffage.

15. Procédé selon les revendications 1 à 14, **caractérisé en ce qu'**après le soudage, on ne procède pas à un recuit léger de détensionnement.

16. Procédé selon les revendications 1 à 15, **caractérisé en ce qu'**après le soudage, on isole la soudure de la chaleur pour la refroidir lentement à la température ambiante.

17. Procédé selon les revendications 1 à 16, **caractérisé en ce que** le soudage d'assemblage s'effectue au moyen de deux chalumeaux.

18. Procédé selon les revendications 1 à 17, **caractérisé en ce que** le soudage d'assemblage s'effectue par un procédé de soudage manuel électrique.

19. Procédé selon les revendications 1 à 18, **caractérisé en ce qu'**un contrôle de soudabilité n'est pas nécessaire.
